# EUROPÄISCHE PATENTANMELDUNG

(11) **EP 1 637 239 A2**
(43) Veröffentlichungstag der Anmeldung: **22.03.2006**
(21) Anmeldenummer: 05020033.6
(22) Anmeldetag: 14.09.2005
(51) Int. Cl.: B08B 15/02, B23Q 11/00, B01D 45/14

(54) **Vorrichtung zum Erfassen und Absaugen von gasförmigen Medien, insbesondere von Luft, mit Verunreinigungen in fester und/oder flüssiger Form**

(30) Priorität: 17.09.2004 DE 202004014792 U
(71) Anmelder: Handte, Jakob, 78351 Backnang-Ludwigshafen (DE); Rerucha, Raimund, 70499 Stuttgart (DE); Meyer, Ingo, 88131 Lindau (DE)
(72) Erfinder: Handte, Jakob, 78351 Bodman-Ludwigshafen (DE)
(74) Vertreter: Jackisch-Kohl, Anna-Katharina

(57) **Zusammenfassung**

Die Vorrichtung hat einen Drallraum (26), der zumindest teilkreisförmigen Querschnitt hat und mit wenigstens eine Absaugöffnung (21, 22) versehen ist. Um die Vorrichtung so auszubilden, daß die im gasförmigen Medium enthaltenen Verunreinigungen in konstruktiv einfacher Weise optimal abgeschieden werden können, liegt im Strömungsweg des gasförmigen Mediums innerhalb des Drallraumes (26) vor der Absaugöffnung (21, 22) mindestens ein Drallelement (27, 28). An ihm werden die im gasförmigen Medium befindlichen Verunreinigungen einwandfrei entfernt, indem die Verunreinigungen auf das Prallelement (27, 28) fallen.

## Beschreibung

Die Erfindung betrifft eine Vorrichtung zum Erfassen und Absaugen von gasförmigen Medien, insbesondere von Luft, mit Verunreinigungen in fester und/oder flüssiger Form nach dem Oberbegriff des Anspruches 1.

Es ist bekannt, Werkzeugmaschinen in gehäuseartigen Umkleidungen unterzubringen. Während der .Bearbeitung von Werkstücken auf dieser Maschine wird aus dem von der Umkleidung umschlossenen Raum die Luft abgesaugt. Sie enthält in der Regel Verunreinigungen in Form von Metallstäuben, Metallpartikeln bzw. Metallspänen, Kühlschmierstofftröpfchen und dergleichen. Damit diese Verunreinigungen beim Absaugen der Luft aus der gehäuseartigen Umkleidung nicht in das Absaugsystem gelangen, ist es bekannt, diese Verunreinigungen in fester und flüssiger Form in einem Drallraum abzuscheiden. In diesem Drallraum wird die abgesaugte Luft in eine Drall- bzw. Wirbelströmung versetzt. Die in der Luft enthaltenen Verunreinigungen werden dabei durch Zentrifugalkraft abgeschieden. Es hat sich gezeigt, daß die Verunreinigungen trotz des Drallraumes über die Absaugöffnung in das Absaugsystem gelangen. Dies ist insbesondere dann der Fall, wenn beispielsweise bei spanabhebenden Bearbeitungen an der Werkzeugmaschine die Späne direkt in die Vorrichtung gelangen.

Der Erfindung liegt die Aufgabe zugrunde, die gattungsgemäße Vorrichtung so auszubilden, daß die im gasförmigen Medium enthaltenen Verunreinigungen in konstruktiv einfacher Weise optimal abgeschieden werden.

Diese Aufgabe wird bei der gattungsgemäßen Vorrichtung erfindungsgemäß mit den kennzeichnenden Merkmalen des Anspruches 1 gelöst.

Bei der erfindungsgemäßen Vorrichtung befindet sich im Strömungsweg des gasförmigen Mediums innerhalb des Drallraumes das Prallelement. An ihm werden die im gasförmigen Medium befindlichen Verunreinigungen einwandfrei entfernt, indem die Verunreinigungen auf das Prallelement fallen und dadurch aus dem abgesaugten Gasstrom gelangen. Auf diese konstruktiv einfache Weise werden die Verunreinigungen zuverlässig abgeschieden, so daß sie nicht über die Absaugöffnung in das Absaugsystem gelangen

Weitere Merkmale der Erfindung ergeben sich aus den weiteren Ansprüchen, der Beschreibung und den Zeichnungen.

Die Erfindung wird anhand eines in der Zeichnung dargestellten Ausführungsbeispieles näher erläutert. Es zeigen
- Fig. 1: in Seitenansicht eine erfindungsgemäße Vorrichtung zum Erfassen und Absaugen von Luft oder anderen Gasen,
- Fig. 2: eine Unteransicht der Vorrichtung gemäß Fig. 1,
- Fig. 3: eine Ansicht in Richtung des Pfeiles A in Fig. 1,
- Fig. 4: in Vorderansicht eine zweite Ausführungsform einer erfindungsgemäßen Vorrichtung zum Erfassen und Absaugen von Luft oder anderen Gasen,
- Fig. 5: eine Seitenansicht der Vorrichtung gemäß Fig. 4,
- Fig. 6: eine Draufsicht auf die Vorrichtung gemäß Fig. 4,
- Fig. 7 bis Fig. 9: in Darstellungen entsprechend den Fig. 4 bis 6 eine dritte Ausführungsform einer erfindungsgemäßen Vorrichtung zum Erfassen und Absaugen von Luft oder anderen Gasen.

Die Vorrichtung dient zum Absaugen von in gewerblichen oder industriellen Bereichen anfallenden Luftverunreinigungen. Vorteilhaft wird die Vorrichtung bei Werkzeugmaschinen eingesetzt, die von gehäuseartigen Umkleidungen umgeben sind. Für die Werkstückbearbeitung werden Kühlschmierstoffe und dergleichen eingesetzt, die in die innerhalb der Umkleidung befindliche Luft gelangen. Aus der Umkleidung wird während der Werkstückbearbeitung ständig Luft abgesaugt. In ihr befindliche Verunreinigungen, wie Kühlschmierstoffe, anfallende Späne und dergleichen, werden zwangsläufig mit abgesaugt. Mit der Vorrichtung werden diese Luftverunreinigungen abgefangen, so daß nur die Luft nach außen gelangt, nicht jedoch die Verunreinigungen.

Die Vorrichtung hat ein kastenförmiges Gehäuse 1, das beispielhaft rechtekkigen Umriß hat. Es hat Seitenwände 2 bis 5 sowie eine Decke 6. Die Seitenwände 2 bis 5 sind an ihrem von der Decke 6 abgewandten Ende jeweils rechtwinklig nach außen zur Bildung von Befestigungsflanschen 7 bis 10 abgewinkelt. Mit ihnen wird die Vorrichtung auf der Außenseite der Verkleidung der Werkzeugmaschine befestigt. Die gehäuseartige Umkleidung der Werkzeugmaschine hat eine Absaugöffnung, über die die Vorrichtung montiert wird. Diese Öffnung hat vorteilhaft gleichen oder nur geringfügig kleineren Querschnitt als der von den Seitenwänden 2 bis 5 der Vorrichtung begrenzte Einlaßquerschnitt. Die Seitenwände 2 bis 5 und die Decke 6 sind vorteilhaft eben.

An die Seitenwand 4 ist eine Dralleinheit 11 angeschlossen, mit der in noch zu beschreibender Weise die angesaugte Luft mit Verunreinigungen in eine Drallströmung versetzt wird. In ihr werden die in der angesaugten Luft befindlichen Verunreinigungen infolge der Zentrifugalwirkung abgeschieden, so daß diese Verunreinigungen nicht zusammen mit der Luft abgesaugt werden und in das Absaugsystem gelangen.

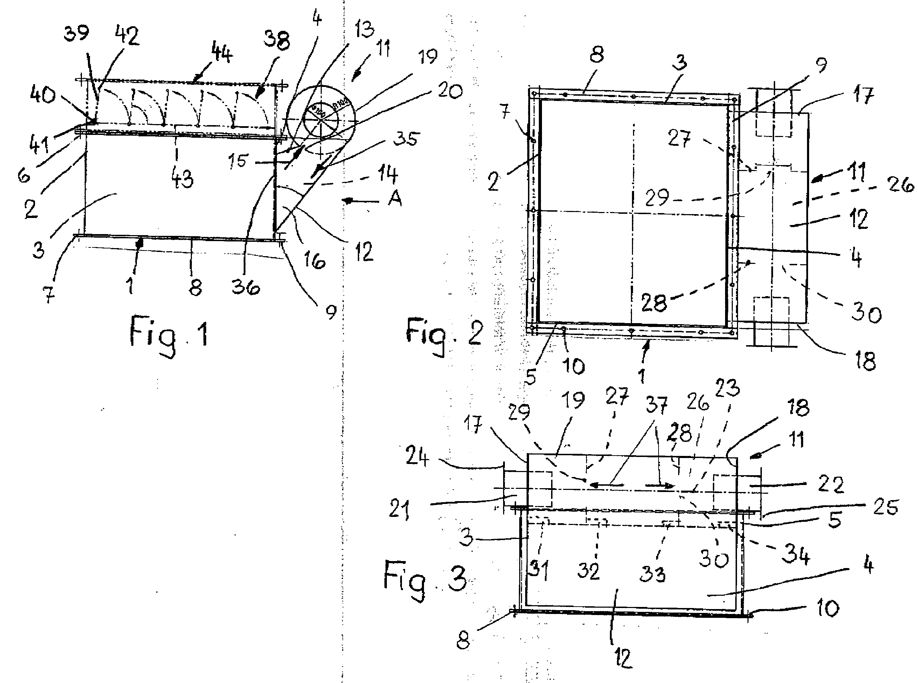

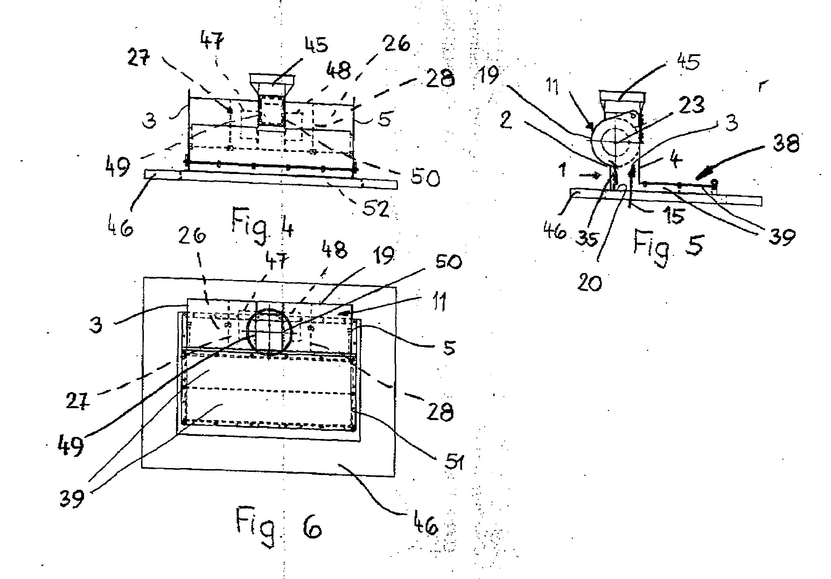

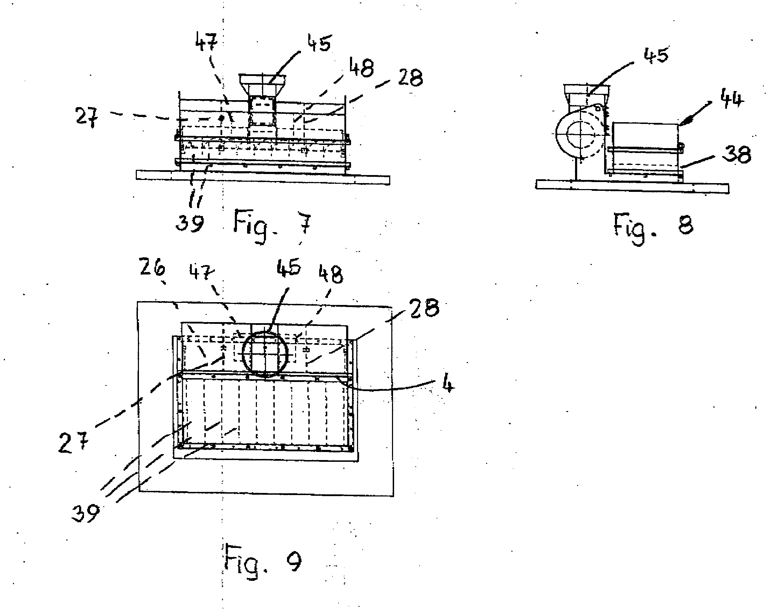

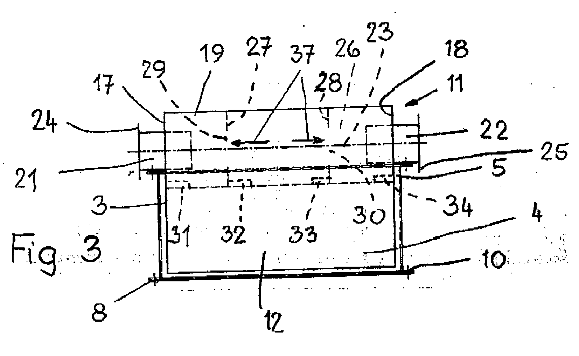

Die Dralleinheit 11 hat eine untere, vorzugsweise ebene Wand 12, die nahe dem Befestigungsflansch 9 an die Seitenwand 4 des Gehäuses 1 anschließt (Fig. 1 und 3). Wie Fig. 3 zeigt, erstreckt sich diese Wand 12 nahezu über die gesamte Breite der Seitenwand 4 zwischen den Seitenwänden 3 und 5.

Der Wand 12 liegt eine weitere Wand 13 gegenüber, die nahe der Decke 6 an die Seitenwand 4 des Gehäuses 1 anschließt. Beide Wände 12, 13 begrenzen einen schräg aufwärts gerichteten Strömungskanal 14, dessen Querschnitt sich in Absaugrichtung 15 (Fig. 1) stetig verjüngt. Die untere Wand 12 schließt einen kleineren spitzen Winkel mit der Gehäuseseitenwand 4 ein als die obere Wand 13. Der Neigungswinkel der unteren Wand 12 liegt beispielsweise bei etwa 40°. Dieser Neigungswinkel 16 wird so gewählt, daß die abgeschiedenen Verunreinigungen längs der unteren Wand 12 des Strömungskanales 14 zuverlässig nach unten fallen können.

Der Strömungskanal 14 ist an beiden Enden durch jeweils eine vorteilhaft ebene Wand 17, 18 geschlossen.

Die untere Kanalwand 12 geht tangential in eine Zylinderwand 19 über. Sie erstreckt sich zwischen den Endwänden 17, 18. Die Kanalwand 13 schließt im Unterschied zur Kanalwand 12 nicht tangential an die Zylinderwand 19 an, sondern in einem Abstand zu ihr, der etwa dem Radius der Zylinderwand 19 entspricht. Anstelle der Zylinderwand kann auch eine im Querschnitt polygone oder eine von der Kreisform abweichende Umfangswand vorgesehen sein. Sie muß lediglich so gestaltet sein, daß mit ihr eine Drall- bzw. Wirbelströmung der angesaugten Abluft erzeugt werden kann.

Im Bereich zwischen den beiden Seitenwänden 12, 13 ist die Zylinderwand 19 mit wenigstens einer Einlaßöffnung 20 für die angesaugte Abluft versehen. Sie kann sich im wesentlichen über die ganze axiale Länge der Dralleinheit 11 bzw. der Zylinderwand 19 erstrecken. Es ist aber auch möglich, anstelle der einzigen Einlaßöffnung mehrere Einlaßöffnungen vorzusehen, die vorteilhaft axial hintereinander liegen. Die Einlaßöffnung 20 ist vorzugsweise so angeordnet, daß sie benachbart zur Kanalseitenwand 13 liegt. Es ist möglich, daß die Einlaßöffnung 20 an einem Rand durch die Kanalwand 13 begrenzt wird.

Die Endwände 17, 18 weisen im Ausführungsbeispiel jeweils einen Absaugstutzen 21, 22 auf. Die beiden Absaugstutzen 21, 22 liegen koaxial zueinander. Ihre Achsen liegen in der Achse 23 der Zylinderwand 19. Über die Absaugstutzen 21, 22 gelangt die aus der Umkleidung der Werkzeugmaschine abgesaugte Luft in das jeweilige Absaugsystem. Die Absaugstutzen 21, 22 haben einen kreisförmigen Querschnitt und sind jeweils mit einem radial nach außen gerichteten Ringflansch 24, 25 versehen, über welche der Anschluß an das Absaugsystem erfolgt.

Die Dralleinheit 11 kann abweichend vom dargestellten Ausführungsbeispiel auch nur einen Absaugstutzen aufweisen. Auch dann wird die aus der Umkleidung der Werkzeugmaschine abgesaugte Luft zuverlässig abgeführt.

Die Absaugstutzen 21, 22 ragen teilweise in einen von der Zylinderwand 19 umschlossenen Wirbelraum 26.

Mit Abstand vor dem im Wirbelraum 26 befindlichen Ende der Absaugstutzen 21, 22 ist jeweils ein Prallelement 27, 28 angeordnet, das als Scheibe ausgebildet ist, die mittig eine Durchtrittsöffnung 29, 30 für die abzusaugende Luft aufweist. Die Prallelemente 27, 28 sind über ihren Umfang an der Innenseite der Zylinderwand 19 abgedichtet befestigt. Hat die Dralleinheit 11 nur einen Absaugstutzen, dann ist dementsprechend auch nur ein Prallelement mit Abstand vor diesem Absaugstutzen im Wirbelraum 26 befestigt.

Im Bereich zwischen den Kanalwänden 12, 13 ist die Zylinderwand 19 im Ausführungsbeispiel mit vier Auslaßöffnungen 31 bis 34 (Fig. 3) versehen, die vorteilhaft gleichen Auslaßquerschnitt haben. Die Auslaßöffnungen 31 bis 34 sind nahe benachbart zur unteren Kanalwand 12 vorgesehen. Es ist möglich, die Auslaßöffnungen 31 bis 34 so anzuordnen, daß sie an einer Seite durch die Kanalwand begrenzt werden. Die Auslaßöffnungen 31 und 34 befinden sich im Bereich unterhalb der Ansaugstutzen 21, 22. Die Auslaßöffnungen 32, 33 sind benachbart zu den Prallelementen 27, 28 an ihren einander zugewandten Seiten vorgesehen. Die aus diesen Auslaßöffnungen 31 bis 34 herausfallenden Verunreinigungen gelangen auf die schräg nach unten gerichtete Kanalwand 12, längs der sie in Auslaßrichtung 35 (Fig. 1) nach unten geführt werden.

Die beschriebene und dargestellte Vorrichtung bildet eine Art Doppelzyklon, mit der in der abgesaugten Luft befindliche Verunreinigungen, wie Stäube, Späne, Staubpartikel, Tröpfchen von Kühlschmierstoff und dergleichen, vorabgeschieden werden. Über die Absaugstutzen 21, 22 wird die in der gehäuseartigen Umkleidung der Werkzeugmaschine befindliche Luft abgesaugt. Sie gelangt zunächst über die Auslaßöffnung in der Umkleidung in das Gehäuse 1. Von hier aus strömt diese verunreinigte Luft über eine entsprechende Durchtrittsöffnung 36 in der Gehäuseseitenwand 4 in den schräg aufwärts gerichteten Strömungskanal 14. Hier strömt die Abluft in Absaugrichtung 15 schräg aufwärts und gelangt durch die wenigstens eine Einlaßöffnung 20 in den Wirbelraum 26. Aufgrund der schräg verlaufenden oberen Kanalwand 13 gelangt die verunreinigte Luft etwa tangential in den Wirbelraum 26. An der Innenseite der Zylinderwand 19 wird somit diese verunreinigte Luft in eine Drallströmung versetzt, die eine gegenüber der Eintrittsgeschwindigkeit der Luft in den Wirbelraum 26 hohe Umfangsgeschwindigkeit aufweist. Die angesaugte Luft wird längs der Innenseite der Zylinderwand 19 in Richtung auf die Absaugstutzen 21, 22 gelenkt. Der Teil der abgesaugten Luft, der im Bereich zwischen den beiden Prallelementen 27, 28 in den Wirbelraum 26 eintritt, trifft bei seinem Drallweg auf die Prallelemente 27, 28. Aufgrund der hohen Zentrifugalkraft innerhalb der Drall- bzw. Wirbelströmung der Luft prallen die Verunreinigungen an den Prallelementen 27, 28 ab und fallen längs der Innenseite der Zylinderwand 19 nach unten, wo sie durch die Auslaßöffnungen 32, 33 nach außen in den Strömungskanal 14 gelangen. Die Prallelemente 27, 28 liegen senkrecht zur Achse 23 der Drallströmung 37, wodurch eine optimale Abscheidung der in der Luft befindlichen Partikel gewährleistet ist. Die scheibenförmigen Prallelemente 27, 28 liegen vorteilhaft senkrecht zur Achse 23 der Zylinderwand 19. Die Luft selbst gelangt durch die zentralen Durchtrittsöffnungen 23, 30 der Prallelemente 27, 28 zu den Absaugstutzen 21, 22. Die Durchtrittsöffnungen 29, 30 der Prallelemente 27, 28 haben vorteilhaft gleichen oder annähernd gleichen Querschnitt wie die Absaugstutzen 21, 22. Zudem haben die Absaugstutzen 21, 22 und die Prallelemente 27, 28 vorteilhaft eine gemeinsame Achse. Auf diese Weise kann die gereinigte Abluft einwandfrei aus dem Wirbelraum 26 an beiden Enden der Dralleinehit 11 abgesaugt werden.

Der Anteil der abgesaugten verunreinigten Luft, der im Bereich zwischen den Prallelementen 27, 28 und den benachbarten Endwänden 17, 18 in den Wirbelraum 26 eintritt, wird an der Innenseite der Zylinderwand 19 im Bereich zwischen dem jeweiligen Prallelement 27, 28 und der benachbarten Endwand 17, 18 in eine Drallströmung versetzt, wodurch die in diesem Teil der Luft befindlichen Verunreinigungen infolge Zentrifugalwirkung abgeschieden werden. Diese Teilchen können dann durch die Auslaßöffnungen 31, 34 nach unten in den Strömungskanal 14 gelangen. Damit sich am Übergang von den Auslaßöffnungen 31 bis 34 und der Innenseite der Zylinderwand 19 keine Ablagerungen bilden, werden die Auslaßöffnungen 31 bis 34 an einer Seite durch die Schrägwand 12 des Strömungskanales 14 begrenzt. Die im Bereich zwischen der Endwand 17, 18 und dem Prallelement 27, 28 befindliche Luft vermischt sich mit der durch die Durchtrittsöffnungen 29, 30 strömenden, gereinigten Luft.

Die Dralleinheit mit den beiden Absaugstutzen 21, 22 ist besonders dann geeignet, wenn sie eine verhältnismäßig große Länge hat. Bei kürzeren Dralleinheiten 11 reicht nur ein Absaugstutzen in der einen Endwand aus. Auch wenn in diesem Falle nur eine Strömungssenke in der einen Endwand 17 oder 18 vorgesehen ist, wird der beschriebene Reinigungseffekt der Luft in ausreichendem Maße erreicht.

Vorteilhaft ist die Vorrichtung mit einem Flamm- und/oder Explosionsschutz versehen. Wie Fig. 1 zeigt, ist auf der Decke 6 des Gehäuses 1 eine Druckentlastungseinrichtung 38 angeordnet. Sie weist Lamellen 39 auf, die mit ihrem einen Längsrand 40 schwenkbar gelagert sind. Die Lamellen 39 sind so breit, daß sie mit ihrem der Schwenkachse 41 gegenüberliegenden Längsrand 42 in der Schließstellung auf dem Längsrand 40 der benachbarten Lamelle 39 aufliegen. Auf diese Weise verschließen die Lamellen 39 in der Ausgangslage eine in der Decke 6 vorgesehene Öffnung 43. Die Lamellen 39 liegen unter ihrem Eigengewicht in der horizontalen Schließstellung. Tritt nun innerhalb der gehäuseartigen Umkleidung der Werkzeugmaschine eine Explosion auf, dann werden sämtliche Lamellen 39 unabhängig voneinander gleichzeitig in ihre in Fig. 1 dargestellte Offenstellung um die horizontalen Schwenkachsen 49 geschwenkt. Dadurch wird innerhalb kürzester Zeit der gesamte Querschnitt der Öffnung 43 in der Gehäusedecke 6 freigegeben, so daß der Explosionsdruck nach außen gelangen kann. Dadurch wird sichergestellt, daß weder das Gehäuse 1 noch die Dralleinheit 11 noch das daran angeschlossene Absaugsystem durch den Explosionsdruck beschädigt werden. Die Lamellen 39 sind an einem (nicht dargestellten) Rahmen gelagert, dessen Rahmenöffnung durch die Lamellen 39 verschlossen wird. Je nach Größe der Öffnung 43 in der Gehäusedecke 6 können sich die Lamellen 39 über die gesamte Breite der Öffnung erstrecken. Bei größerem Öffnungsquerschnitt können auch zwei oder mehrere Lamellen 39 jeweils nebeneinander angeordnet sein. In diesem Fall ist der Rahmen mit entsprechenden Zwischenstreben versehen, um die fluchtend nebeneinander liegenden Lamellen schwenkbar lagern zu können.

Vorteilhaft wird die Druckentlastungseinrichtung 38 durch eine Flammschutzeinrichtung 44 abgedeckt. Sie wird vorteilhaft durch einen Käfig gebildet, der aus einem sehr engmaschigen Drahtgitter besteht. Dadurch wird in einfacher und dennoch zuverlässiger Weise ein Flammenaustritt verhindert, falls es in der Umkleidung zu einem Brand kommen sollte. Der Flammschutzkäfig, hat vorteilhaft gleichen Umriß wie die Gehäusedecke 6.

Die beschriebene Vorrichtung ist vorteilhaft an der Decke der gehäuseartigen Umkleidung der Werkzeugmaschine vorgesehen. Je nach Größe dieser Umkleidung können auch zwei oder mehr solcher Vorrichtung montiert werden. Ebenso ist es möglich, die Vorrichtung auch an wenigstens einer Seitenwand der Umkleidung anzuordnen.

Bei den Ausführungsformen gemäß den Fig. 4 bis 6 und 7 bis 9 ist die Vorrichtung mit einem zentralen Ansaugstutzen 45 versehen. Er ist in halber Länge des kastenförmigen Gehäuses 1 vorgesehen, das auf der Decke 46 der Maschinenumkleidung befestigt ist. Im Unterschied zur vorigen Ausführungsform ist das Gehäuse schmal ausgebildet und an seiner Unterseite zur Bildung der Einlaßöffnung 20 vollständig offen. Dadurch kann aus der Umkleidung während der Werkstückbearbeitung die Luft mit den Verunreinigungen zuverlässig abgesaugt werden. Der große Querschnitt der Einlaßöffnung 20 gewährleistet einen optimalen Luftstrom. Das Gehäuse 1 wird von den Längsseitenwänden 2, 4 sowie den senkrecht zu ihnen liegenden schmalen Seitenwänden 3, 5 begrenzt. Die Dralleinheit 11 ist etwa in halber Höhe des Gehäuses 1 vorgesehen und hat die zylindrische Wand 19, die über die Längsseitenwand 2 des Gehäuses 1 nach außen vorsteht. Die Wand 19 erstreckt sich etwa über die ganze Länge der Längsseitenwand 2 und begrenzt den Wirbelraum 26 der Dralleinheit 11.

Der Ansaugstutzen 45 erstreckt sich bis in den Wirbelraum 26. Die Verbindung zwischen dem innerhalb des Wirbelraumes 26 befindlichen Teils des Ansaugstutzens 45 und dem Wirbelraum 26 wird durch zwei Tauchrohre 47, 48 erreicht, die jeweils zylindrisch ausgebildet sind und deren Achsen fluchtend zueinander liegen. Die beiden Tauchrohre 47, 48 haben vorteilhaft gleichen Durchmesser. Sie sind vorteilhaft gleich lang und schließen innerhalb des Wirbelraumes 26 jeweils an Seitenwände 49, 50 des Ansaugstutzens 45 an. In den Seitenwänden 49, 50 befindet sich jeweils eine Öffnung, deren Querschnitt zumindest dem Innenquerschnitt der Tauchrohre 49, 50 entspricht. Wie die Fig. 4 und 6 zeigen, haben die Tauchrohre 47, 48 erheblichen Abstand von den schmalen Seitenwänden 3, 5 des Gehäuses 1. Die Tauchrohre 47, 48 steilen die einzige Verbindung zwischen dem Ansaugstutzen 45 und dem Wirbelraum 26 her. Der Außendurchmesser der Tauchrohre 47, 48 ist kleiner als der Innendurchmesser des Wirbelraumes 26.

Mit Abstand vor dem jeweiligen Tauchrohr 47, 48 befindet sich im Wirbelraum 26 jeweils das Prallelement 27, 28, das entsprechend der vorherigen Ausführungsform ausgebildet und abgedichtet im Wirbelraum 26 angeordnet ist. Die Prallelemente 27, 28 sind als Ringscheiben ausgebildet und haben mittig die Durchtrittsöffnung für die abzusaugende Luft. Die Prallelemente 27, 28 sind über ihren Umfang an der Innenseite der Zylinderwand 19 abgedichtet befestigt.

Auch die Vorrichtung nach den Fig. 4 bis 6 arbeitet nach Art eines Zyklons, mit dem in der abgesaugten Luft befindliche Verunreinigungen, wie Stäube, Späne, Staubpartikel, Tröpfchen von Kühlschmierstoff und dergleichen, vorabgeschieden werden. Ober den zentralen mittigen Ansaugstutzen 45 wird die in der gehäuseartigen Umkleidung der Werkzeugmaschine befindliche Luft abgesaugt. Sie gelangt über die Auslaßöffnung in der Umkleidung und die offene, die Einlaßöffnung 20 bildende Unterseite in das Gehäuse 1. Von hier aus tritt die verunreinigte Luft über die Länge der Dralleinheit 11 in den Wirbelraum 26 etwa tangential ein. Die verunreinigte Luft wird an der Innenseite der Zylinderwand 19 in eine Drallströmung versetzt, die entsprechend der vorhergehenden Ausführungsform eine gegenüber der Eintrittsgeschwindigkeit der Luft in den Wirbelraum 26 hohe Umfangsgeschwindigkeit aufweist. Die angesaugte Luft wird längs der Innenseite der Zylinderwand 19 in Richtung auf den Ansaugstutzen 45 gelenkt. Der Teil der äbgesaugten Luft, der im Bereich zwischen den beiden Prallelementen 27, 28 in den Wirbelraum 26 eintritt, trifft bei seinem Drallweg auf die Prallelemente 27, 28. Aufgrund der hohen Zentrifugalkraft innerhalb der Drall- bzw. Wirbelströmung der Luft prallen die Verunreinigungen an den Prallelementen 27, 28 ab und fallen längs der Innenseite der Zylinderwand 19 nach unten. In Fig. 5 ist die Ausläßrichtung 35 der abgeschiedenen Verunreinigungen eingezeichnet, die in dieser Strömungsrichtung aus dem Wirbelraum 26 herausfallen. In Fig. 5 ist außerdem die Einströmrichtung 15 der verunreinigten Luft eingezeichnet. Die scheibenförmigen Prallelemente 27, 28 liegen wiederum vorteilhaft senkrecht zur Achse, 23 (Fig. 5) der Zylinderwand 19, Die Durchtrittsöffnungen der Prallelemente 27, 28 haben vorteilhaft gleichen oder zumindest annähernd gleichen Querschnitt wie die Tauchrohre 47, 48. Die Prallelemente 27, 28 und die Tauchrohre 47, 48 haben vorteilhaft eine gemeinsame Achse, so daß die gereinigte Abluft einwandfrei aus dem Wirbelraum 26 über die beiden Tauchrohre 47, 48 abgesaugt werden.

Der Anteil der abgesaugten verunreinigten Luft, der im Bereich zwischen den Prallelementen 27, 28 und den benachbarten Seitenwänden der Dralleinheit 11 in den Wirbelraum 26 eintritt, wird an der Innenseite der Zylinderwand 19 im Bereich zwischen dem jeweiligen Prallelement 27, 28 und der benachbarten Stirnwand der Dralleinheit 11 in eine Drallströmung versetzt, wodurch die in diesem Teil der Luft befindlichen Verunreinigungen infolge Zentrifugalkraft abgeschieden werden. Diese Teilchen fallen dann an der Innenseite der Zylinderwand 19 nach unten aus dem Wirbelraum 26. Die gereinigte Luft tritt durch die Durchtrittsöffnungen der Prallelemente 27, 28 hindurch.

Wie bei der vorigen Ausführungsform gelangt aus dem Ansaugstutzen 45 die gereinigte Luft.

Die Vorrichtung ist zusätzlich mit der Druckentlastungseinrichtung 38 versehen, die im Bereich neben dem Gehäuse 1 angeordnet ist. Sie weist im Ausführungsbeispiel zwei Lamellen 39 auf, die gemäß Fig. 6 rechteckigen Umriß haben und jeweils unabhängig voneinander schwenkbar in einem Rahmen 51 gelagert sind. Je nach Größe der in der Decke 46 der Verkleidung befindlichen Öffnung 52 können auch weitere Lamellen vorgesehen sein. Es ist auch möglich, insbesondere, wenn die Lamellen 39 eine entsprechende Gröβe haben, sie jeweils in einem gesonderten Rahmen schwenkbar zu lagern. In diesem Falle sind diese Rahmen unmittelbar aneinander oder nur mit geringem Abstand nebeneinander auf der Decke 46 der Umkleidung montiert.

Wie beim vorigen Ausführungsbeispiel nehmen die Lamellen 39 bei normalem Betrieb der in der Umkleidung stehenden Maschine ihre dargestellte Schließstellung ein. Kommt es innerhalb der Umkleidung zu einer Verpuffung oder einer Explosion, dann werden die Lamellen 39 schlagartig und innerhalb kürzester Zeit aus ihrer in den Fig. 4 bis 6 dargestellten Schließlage nach oben in die Öffnungslage geschwenkt. Die Lamellen 39 bestehen aus entsprechend leichtem Material, so daß die Schwenkbewegung der Lamellen im Gefahrenfalle rasch möglich ist. Da die Lamellen 39 nicht miteinander gekoppelt, sondern unabhängig voneinander schwenkbar sind, wird die Öffnung 52 in der Decke 46 der Umkleidung augenblicklich vollständig freigegeben, so daß der Druck innerhalb der Verkleidung entweichen kann.

Vorteilhaft ist der Rahmen 51 fest mit dem Gehäuse 1 der Vorrichtung verbunden. Es ist auch möglich, diese beiden Teile getrennt voneinander auf der Decke 46 der Maschinenumkleidung zu montieren.

Die Ausführungsform nach den Fig. 7 bis 9 ist im wesentlichen gleich ausgebildet wie das vorige Ausführungsbeispiel. Die Vorrichtung hat wiederum den zentralen Ansaugstutzen 45, die beiden Tauchrohre 47, 48 und den Wirbelraum 26, der über die Tauchrohre 47, 48 mit dem Ansaugstutzen 45 verbunden ist. An den ringscheibenförmigen Prallelementen 27, 28 werden in der beschriebenen Weise die in der angesaugten Luft befindlichen Verunreinigungen abgeschieden.

Der Unterschied zum vorigen Ausführungsbeispiel besteht darin, daß oberhalb der Druckentlastungseinrichtung 38 die Flammschutzeinrichtung 44 angeordnet ist. Sie ist haubenförmig bzw. käfigartig ausgebildet und besteht aus einem sehr engmaschigen. Drahtgitter. Es verhindert in einfacher und zuverlässiger Weise einen Flammenaustritt, falls es in der Umkleidung zu einem Brand kommen sollte.

Wie sich aus den Fig. 7 und 9 beispielhaft ergibt, sind die Lamellen 39 der Druckentlastungseinrichtung 38 senkrecht zur Gehäusewand 4 angeordnet. Außerdem sind die Lamellen 39 wesentlich schmaler als beim vorigen Ausführungsbeispiel. Sämtliche Lamellen 39 sind, wie anhand der Fig. 1 bis 3 erläutert worden ist, unabhängig voneinander schwenkbar, so daß bei einer Verpuffung oder Explosion die Lamellen unabhängig voneinander aus der in Fig. 9 dargestellten Schließstellung aufwärts in die in Fig. 7 erkennbare Offenstellung geschwenkt werden können.

## Patentansprüche

1. Vorrichtung zum Erfassen und Absaugen von gasförmigen Medien, insbesondere von Luft, mit Verunreinigungen in fester und/oder flüssiger Form, mit mindestens einem Drallraum (26), der zumindest teilkreisför migen Querschnitt hat und mit wenigstens einer Absaugöffnung versehen ist,
**dadurch gekennzeichnet, daß** im Strömungsweg des gasförmigen Mediums innerhalb des Drallraumes (26) vor der Absaugöffnung (21, 22, 47, 48) mindestens ein Prallelement (27, 28) liegt.

2. Vorrichtung nach Anspruch 1,
**dadurch gekennzeichnet, daß** das vorteilhaft als Ringscheibe ausgebildete Prallelement (27, 28) senkrecht zum Strömungsweg liegt.

3. Vorrichtung nach einem der Anspruch 1 oder 2,
**dadurch gekennzeichnet, daß** das Prallelement (27, 28) eine Durchtrittsöffnung (29, 30) für das gasförmige Medium aufweist, deren Querschnitt vorteilhaft zumindest annähernd dem Querschnitt der Absaugöffnung (21, 22, 47, 48) entspricht.

4. Vorrichtung nach Anspruch 3,
**dadurch gekennzeichnet, daß** die Achse der Durchtrittsöffnung (29, 30) des Prallelementes (27, 28) mit der Achse der Absaugöffnung (21, 22, 47, 48) zusammenfällt.

5. Vorrichtung nach einem der Ansprüche 1 bis 4,
**dadurch gekennzeichnet, daß** der Drallraum (26) von einer Umfangswand (16) begrenzt ist.

6. Vorrichtung nach einem der Ansprüche 1 bis 5,
**dadurch gekennzeichnet, daß** das gasförmige Medium etwa tangential in den Drallraum (26) eintritt.

7. Vorrichtung nach einem der Ansprüche 1 bis 6,
**dadurch gekennzeichnet, daß** an den Drallraum (26) wenigstens ein Strömungskanal (14) anschließt, dessen Querschnitt sich vorteilhaft in Absaugrichtung (15) verjüngt.

8. Vorrichtung nach Anspruch 7,
**dadurch gekennzeichnet, daß** der Strömungskanal (14) etwa tangential an den Drallraum (26) anschließt.

9. Vorrichtung nach Anspruch 7 oder 8,
**dadurch gekennzeichnet, daß** eine den Strömungskanal (14) begrenzende Seitenwand (12) tangential an die Umfangswand (16) anschließt, die vorteilhaft innerhalb des Strömungskanals (14) mindestens eine Einlaßöffnung (20) aufweist.

10. Vorrichtung nach einem der Ansprüche 5 bis 9,
**dadurch gekennzeichnet, daß** die Umfangswand (16) innerhalb des Strömungskanals (14) mindestens zwei Auslaßöffnungen (31 bis 34) für die im Drallraum (26) abgeschiedenen Verunreinigungen aufweist, und daß vorzugsweise die eine Auslaßöffnung (31, 34) im Bereich der Absaugöffnung (21, 22) und die andere Auslaßöffnung (32, 33) an der von der Absaugöffnung (21, 22) abgewandten Seite des Prallelementes (27, 28) vorgesehen ist.

11. Vorrichtung nach Anspruch 10,
**dadurch gekennzeichnet, daß** die eine Auslaßöffnung (31, 34) an einem Rand von der tangential an die Umfangswand (16) anschließenden Seitenwand (12) des Strömungskanals (14) begrenzt ist.

12. Vorrichtung nach einem der Ansprüche 1 bis 11,
**dadurch gekennzeichnet, daß** die Absaugöffnung Teil eines vorteilhaft in den Drallraum (26) ragenden Absaugstutzens (21, 22, 45) ist.

13. Vorrichtung nach einem derAnsprüche 7 bis 12,
**dadurch gekennzeichnet, daß** der Strömungskanal (14) an ein Gehäuse (1) anschließt, das vorteilhaft an einer gehäuseartigen Umkleidung einer Werkzeugmaschine befestigbar ist.

14. Vorrichtung nach Anspruch 12 oder 13,
**dadurch gekennzeichnet, daß** der Absaugstutzen (45) zentral in den Drallraum (26) ragt.

15. Vorrichtung nach Anspruch 14,
**dadurch gekennzeichnet, daß** innerhalb des Drallraumes (26) an den Absaugstutzen (45) wenigstens ein, vorzugsweise einander gegenüberliegend zwei Tauchrohre (47, 48) angeschlossen sind.

16. Vorrichtung nach Anspruch 15,
**dadurch gekennzeichnet, daß** der Außendurchmesser des Tauchrohres (47, 48) kleiner ist als der Durchmesser des Drallraumes (26).

17. Vorrichtung nach Anspruch 15 oder 16,
**dadurch gekennzeichnet, daß** das Prallelement (27, 28) zwischen dem Tauchrohr (47, 48) und der benachbarten Endwand (3, 5) des Drallraumes (26) angeordnet ist.

18. Vorrichtung nach einem der Ansprüche 1 bis 17,
**dadurch gekennzeichnet, daß** das Gehäuse (1) zur Bildung einer Einlaßöffnung (20) an einer Seite offen ist.

19. Vorrichtung nach einem der Ansprüche 15 bis 18,
**dadurch gekennzeichnet, daß** die vorteilhaft gleichachsig zueinander liegenden Tauchrohre (47, 48) gleich ausgebildet sind.

20. Vorrichtung nach einem der Ansprüche 1 bis 19,
**dadurch gekennzeichnet, daß** die Vorrichtung mit wenigstens einer vorteilhaft frei schwenkbare Lamellen (39) aufweisenden Druckentlastungseinrichtung (38) versehen ist.

21. Vorrichtung nach Anspruch 20,
**dadurch gekennzeichnet, daß** die Lamellen (39) an einem Längsrand (40) schwenkbar gelagert sind und vorteilhaft mit ihrem freien Längsrand (42) auf dem die Schwenkachse (41) aufweisenden Längsrand (40) der jeweils benachbarten Lamelle (39) aufliegen.

22. Vorrichtung nach Anspruch 20 oder 21,
**dadurch gekennzeichnet, daß** die Lamellen (39) unabhängig voneinander schwenkbar sind.

23. Vorrichtung nach einem der Ansprüche 1 bis 22,
**dadurch gekennzeichnet, daß** die Vorrichtung mit wenigstens einer vorteilhaft käfigartig ausgebildeten und vorzugsweise aus feinmaschigem Drahtgitter bestehenden Flammschutzeinrichtung (44) versehen ist.

24. Vorrichtung nach Anspruch 23,
**dadurch gekennzeichnet, daß** die Flammschutzeinrichtung (44) die Druckentlastungseinrichtung (38) abdeckt.
